# EUROPEAN PATENT APPLICATION

(11) **EP 2 809 074 A1**
(43) Date of publication of application: **03.12.2014**
(21) Application number: 13305686.1
(22) Date of filing: 27.05.2013
(51) Int. Cl.: H04N 21/222, H04N 21/231, H04N 21/2747, H04N 21/436, G06F 11/14, H04L 29/06

(54) **A universal plug and play backup system comprising a CPE device including a virtual media server, and respective CPE device**

(71) Applicant: Thomson Licensing, 92130 Issy-les-Moulineaux (FR)
(72) Inventor: De Smedt, Alex, 2250 Olen (BE)
(74) Representative: Arnold, Klaus-Peter

(57) **Abstract**

A Universal Plug and Play backup system comprises a media server (2), a CPE device (1) including a virtual media server (12) with a copy client (13), an Internet media portal (5) coupled via a network service provider network with the CPE device (1), the Internet media portal (5) including a copy server (51) for receiving media files from the copy client (13), and a control device (3) for controlling the media server (2) and for copying a media file from the media server (2) to the virtual media server (12) for a backup of the media file on the Internet media portal (5).

## Description

### TECHNICAL FIELD

The invention relates to the field of end-user devices, in particular to consumer premises equipment coupled via a broadband connection with a service provider network for providing Internet services for a home network.

### BACKGROUND OF THE INVENTION

Residential gateways are widely used to connect devices in a home of a customer to the Internet or any other wide area network (WAN). Residential gateways use in particular digital subscriber line (DSL) technology that enables a high data rate transmission over copper lines or optical fiber transmission systems.

Home networks have become part of everyday life for many users. A home network consists of a range of heterogeneous components which means that the home network is made up of different kinds of devices. All these devices communicate with each other. Examples of networked devices in the home are residential gateways, set-top boxes, television sets, personal computers, tablet PCs, smartphones, network-attached storage (NAS) devices, printers and game consoles. These devices use heterogeneous methods of connectivity to interconnect, which demands for zero-configuration networking and automatic discovery of computers, devices and services. Multiple technologies exist to make device and service discovery seamless. Examples of these technologies are Universal Plug and Play (UPnP), Apple's Bonjour and Microsoft's CIFS.

USB (Universal Serial Bus), also Firewire, IEEE 1394, are standard digital interfaces for connecting devices to a personal computer. These interfaces are hot-pluggable, which means that devices can be plugged in and unplugged from the interface without rebooting the respective personal computer, and connected devices are automatically recognized by the personal computer, which is described as "Plug and Play".

An extension of "Plug and Play" is UPnP, "Universal Plug and Play", which is defined by an International Standard, ISO/IEC 29341. UPnP Device Architecture defines methods for discovering devices and services in the home network. An audio and video extension of UPnP is UPnP AV (UPnP for Audio/Video), which allows a higher level of interoperability between UPnP devices. UPnP AV defines a control point which is a function using UPnP protocols to control UPnP devices and defines actions for rendering pictures, music and videos. Although a control point can manage multiple UPnP devices, all interactions occur in isolation between the control point and each UPnP device. The individual UPnP devices do not interact directly with each another. Also residential gateways advantageously include a UPnP architecture to allow device-to-device networking with personal computers, networked home appliances, removable storage devices or other consumer electronics devices. UPnP AV allows to deliver streaming media, for example real-time audio/video streams, for which it is critical to be delivered within a specific time, or the stream is interrupted. The current UPnP AV version 2 specification is defined by the UPnP Forum, which is a group of companies and individuals for defining specifications for UPnP devices and services.

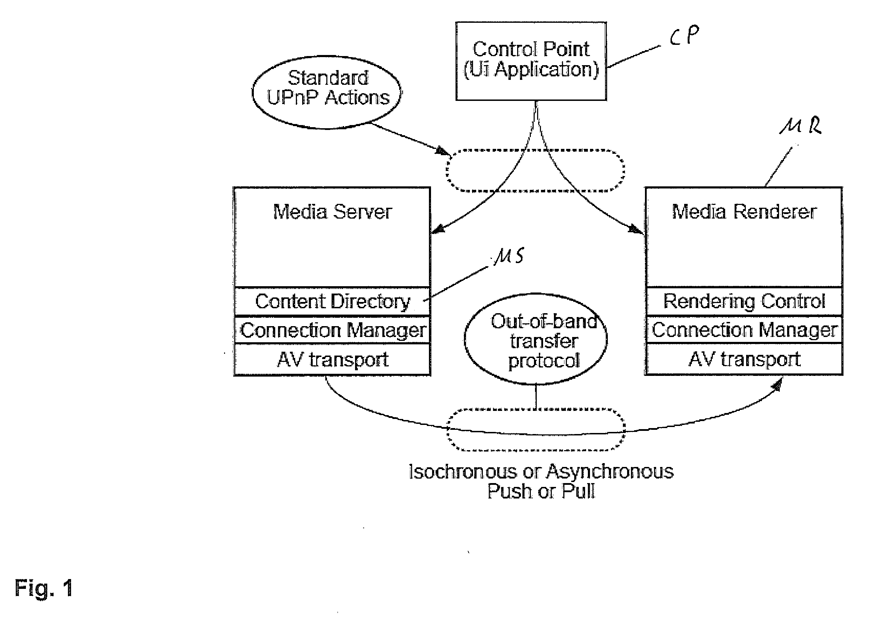

UPnP AV defines three services: a media server for serving media content, a media renderer capable of playing one or more media formats, and a control point for controlling the media server and the media renderer. An environment with a UPnP AV media server MS, a control point CP and a media renderer MR is shown in Fig. 1, wherein the media server, the media renderer and the control point are separate devices according to a 3-Box model. The media server MS may have for example a USB or Firewire interface, via which a removable storage device containing audio/video media can be connected to the media server MS. The control point CP coordinates the operation of the media server MS and the media renderer MR to achieve an overall, synchronized end-user effect. The media server MS and the media renderer MR do not interact directly with each another, all of the coordination between the two devices is performed by the control point CP.

The Digital Living Network Alliance (DLNA) has defined a specification for defining interoperability guidelines to enable sharing of digital media as media files between multimedia devices. These guidelines are built upon existing public standards and specify a set of restricted ways of using the standards to achieve interoperability. DLNA uses UPnP for media management, discovery and control. UPnP defines the type of device that DLNA supports ("server", "renderer", "controller") and the mechanisms for accessing media over a network. The DLNA guidelines then apply a layer of restrictions over the types of media file format, encodings and resolutions that a device must support.

Media backup in a service provider network, e.g. the Internet, requires a backup server from the service provider where a user, subscribed to the backup service, gets some memory space for storing of his media files. After the user authenticates to the backup service, he is able to transfer media files to the backup server of the service provider, which will be accessible again after authentication. The content backup can happen directly from a user terminal to the backup server. This is a simple upload of a file to the backup server, which file can be a media file or not, e.g. via a http or a ftp upload. The file needs to be accessible via a local file explorer of the user terminal, which is able to select the files in the home network for upload. Via a browser or a ftp program, the same file can be downloaded from the backup server.

The disadvantage of this method is that it is rather file handling than media control, not integrated in the UPnP AV environment. Also, all users of the home network who want to make use of the service need to know the credentials for the authentication. It would be advantageous to perform a content backup to a backup media server in the service provider network when acting within the UPnP AV environment, where the media files can be seen and can be shared between different devices of the users of the home network.

WO 2011/154375 describes an unattended backup system for performing automatic backups of user data contained in the local drives of at least one computer of a local area network by means of a residential gateway, which is connected to a backup server of a network provider. A backup method is provided which enables a backup in an automatic way without the need of providing UPnP support. The residential gateway includes a PXE server proxy which acts as a proxy in order to allow computers to be remotely booted by sending an image of the operating system to the computer, and the computer includes a PXE client acting as a pre-booting execution environment client which allows the computer to be booted independently of an operating system previously installed on the computer.

US 2009/0144341 describes a data storage system for backup, which detects devices in a home network, determines data to be archived on the devices and initiates an automatic backup of the data on a media space of a network service provider.

### SUMMARY OF THE INVENTION

The Universal Plug and Play backup system of the invention, comprises a media server including a media storage device, a CPE device including a backup function with a virtual media server comprising a copy client, an Internet media portal coupled via a network service provider network with the CPE device, wherein the Internet media portal includes a copy server for receiving media files from the copy client, and a control device for controlling the media server and for copying a media file from the media server to the virtual media server for a backup of the media file on the Internet media portal. The system is in particular a Universal Plug and Play Audio/Video system according to a Universal Plug and Play Audio/Video standard comprising the backup function, wherein the media file is copied from the media server to the virtual media server via Universal Plug and Play Audio/Video commands according to the Universal Plug and Play Audio/Video standard.

In an aspect of the invention, the media file copied to the Internet media portal has a representation in the virtual media server, via which the media file is accessible by a user of the control device. The media file copied to the Internet media portal for backup is displayed for example in a file folder of the virtual media server within a list of other backed-up media files. The list is advantageously synchronized with the media files copied to the Internet media portal.

In a further aspect of the invention, the backup function includes an authentication function to authenticate with the Internet media portal, in order to get authorized to copy the media file to the Internet media portal and to get access to other media files already copied to the Internet media portal, the authentication function containing the respective user credentials for accessing the Internet media portal, which authentication function starts automatically with the operation of the CPE device.

In a preferred embodiment, the backup function including the virtual media server and the authentication function is a part of a DLNA backup proxy included in the CPE device, wherein the DLNA backup proxy operates as a DLNA media server in accordance with a DLNA standard.

A CPE device according to the invention comprises a backup function with a virtual media server and a copy client for copying a media file from a home network to an Internet media portal coupled via a network service provider network with the CPE device for a backup of the media file on the Internet media portal. The CPE device includes in particular a media server in accordance with a Universal Plug and Play Audio/Video standard, wherein the media file is copied from a media server of the home network to the virtual media server via Universal Plug and Play Audio/Video commands according to the Universal Plug and Play Audio/Video standard.

Advantageously, the media file copied to the Internet media portal has a representation in the virtual media server of the CPE device, via which the media file is accessible by a user of a control device, and the backup function includes an authentication function to authenticate with the Internet media portal, in order to get authorized to copy the media file to the Internet media portal and to get access to other media files already copied to the Internet media portal, which authentication function starts automatically with the operation of the CPE device. No further authentication is therefore required for the backup function after the residential gateway is switched on, so that the backup function can be used by any user of the home network without the need for authentication.

### BRIEF DESCRIPTION OF THE DRAWINGS

Preferred embodiments of the invention are explained in more detail below by way of example with reference to schematic drawings, which show:
- Fig. 1: a generic UPnP AV system including a media server, a control point and a media renderer,
- Fig. 2: a UPnP AV backup system comprising a media server and a CPE device with a virtual media server, and
- Fig. 3: a message flow for a backup of a media file within the UPnP AV backup system according to figure 2.

### DETAILED DESCRIPTION OF PREFERRED EMBODIMENTS

In the following description, a Universal Plug and Play backup system comprising a media server including a media storage device, a CPE device including a virtual media server with a copy client, an Internet media portal coupled via a network service provider network with the CPE device, the Internet media portal including a copy server for receiving copies of media files from the copy client, and a control device for controlling the media server is described. For purposes of explanation, numerous specific details are set forth in order to provide a thorough understanding of preferred embodiments. It will be evident, however, to one skilled in the art that the present invention may be practiced without these specific details.

The CPE device is for example a residential gateway, a router or a switch, and includes a central processing unit, a non-volatile memory, in which an operating system and applications are stored, and a volatile memory for the operation of the CPE device. The CPE device includes in particular hardware and software components for providing for example an xDSL modem function, gateway and switching functions, and may include further FXS functions, VoIP functionality and Wi-Fi operation.

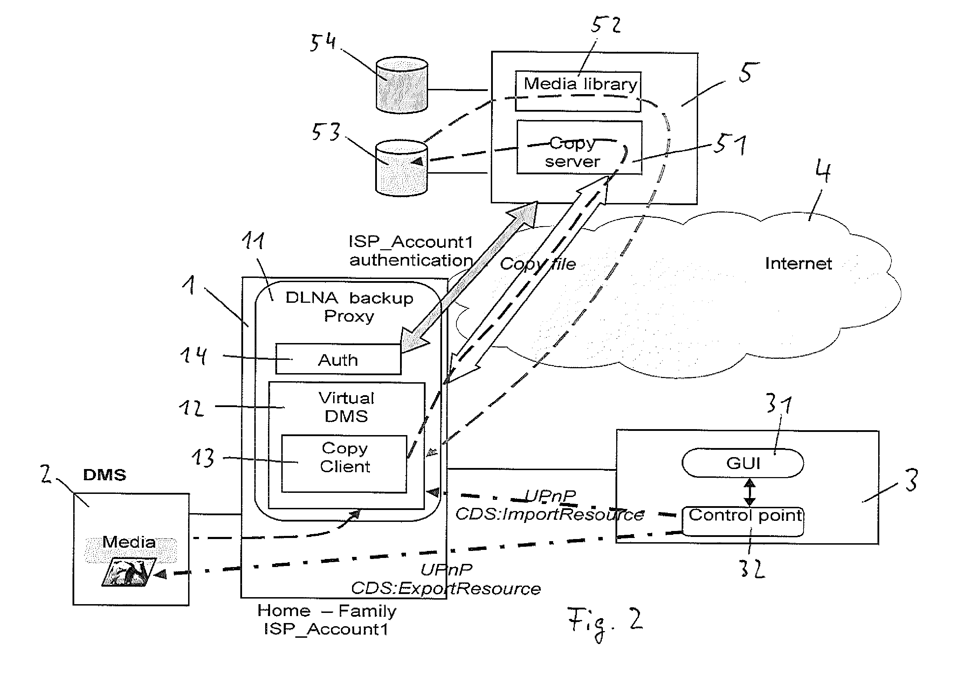

In figure 2, a residential gateway 1 is shown, which is coupled via a network service provider (NSP) network with the Internet 4 for providing Internet services for a user of the residential gateway 1. To the residential gateway 1, a multitude of devices of the user may be coupled, via wireless or wired connections, constituting a home network of the user. To the residential gateway 1 further a media server 2 is connected, on which user files and media files, e.g. audio and video files of the user or also of other persons using the home network, are stored.

The media server 2 is in particular a Universal Plug and Play Audio/Video (UPnP AV) media server according to a UPnP AV standard or recommendation and can be controlled via a corresponding UPnP AV control point 32 via UPnP AV commands. The control point 32 is included in a control device 3, e.g. a smartphone or any control device including a graphical user interface 31 and the control point 32 in accordance with the UPnP AV standard. The control point 32 allows to auto detect UPnP AV media servers of the home network via a discovery mechanism and to browse media files on the media server 2 and to stream the media files to a UPnP AV media renderer of the home network, for example to a smart TV or to a notebook, not shown. The media server 2 includes in particular a media storage device, e.g. a hard disc drive or a flash memory device. A home network of this kind is known from prior art.

For a backup of the media files stored on the media server 2, which is always advisable to avoid any data loss, a further hard disk drive is required in the home network. Alternatively, content backup in the Internet cloud, for example on a server of the network service provider or any Internet service provider, on which the user can allocate some storage place, is also possible. For using content backup in the Internet cloud, the user has to subscribe to a respective backup service, and for uploading media files, user authentication is required by the user in order to transfer media files to the Internet backup server. For a backup further of further media files, also for any download, e.g. a restore operation, again authentication with the Internet backup server is required. Content backup of media files stored on the media server 2 on an Internet backup server can be performed by using a PC or a Notebook and selecting the respective media files on the media server 2 by using a file browser or file explorer of the PC or a Notebook, and copying them via the residential gateway 1 to the Internet backup server. This is a simple upload of files via for example a http upload command, whether media file or not.

The files need to be accessible therefore via a local file explorer which is able to select the files in the home network for upload. Via a browser, the same files can be downloaded at any time later from the Internet backup server. The disadvantage of this method is that it is rather file handling than media control, and is not integrated in the UPnP AV system of the home network. Also, any other user of the home network who wants to use the Internet backup service needs to know the credentials for authentication with the Internet cloud.

According to the invention, the residential gateway 1 includes a backup function 11 acting as a proxy server for the media server 2 for a backup of media files stored on the media server 2 to an Internet media portal 5. The backup function 11 can be accessed from any user of the home network for backup and restore operations of his media files as stored on the media server 2. The Internet media portal 5 acts as a user space to which media files can be easily added or deleted by any user of the home network. The Internet media portal 5 is managed for example by the network service provider or by any Internet service provider.

The backup function 11 is in particular a DLNA backup function: a DLNA backup proxy operating as a DLNA media server in accordance with a DLNA standard. The backup function 11 acts therefore as a virtual media server 12, a virtual DMS (digital media server) 12, because the media files stored on the Internet media portal 5 have a representation in the virtual DMS 12. Copying of media files is started via the control device 3 and UPnP AV commands, e.g. export and import functions, via which a media file is copied to the virtual DMS 12. The Internet media portal 5 includes a copy server 51 for providing a communication with a copy client 13 included in the virtual DMS 12. The Internet media portal 5 includes further a media library 52 and a user media space 53, on which the media files are stored. The Internet media portal 5 includes also an account data base 54 on which user accounts and sharing information are stored, to provide authorization with a multitude of clients of the Internet media portal 5.

The backup function 11 includes further an authentication function 14, to provide authentication with the Internet media portal 5, in order to get authorized to copy media files to the Internet media portal 5 and back to the home network. The authentication function 14 includes the necessary credentials for accessing the Internet media portal 5, and the authentication starts automatically, if not already done, if any user in the home network likes to access the Internet media portal 5. The authentication is provided advantageously automatically by the authentication function 14 when the residential gateway 1 is switched on, so that the backup function 11 can be used by any user of the home network without the need of any further authentication.

The copy client 13 of the backup function 11 includes in particular a backup copy function, which is able to copy a media file, which is copied to the virtual DMS 12 via a UPnP AV copy action, automatically to the user media space 53 on the Internet media portal 5. After copying, the virtual DMS 12 just keeps the reference of the copied media file, so that the virtual DMS 12 appears as a media server for a user of the home network, but the media files are not stored in the residential gateway 1, but on the Internet media portal 5, and the virtual DMS 12 includes only the references of the media files as stored in the Internet media portal 5, so that for a user it appears that the media files are stored in the home network, but not on the Internet media portal 5.

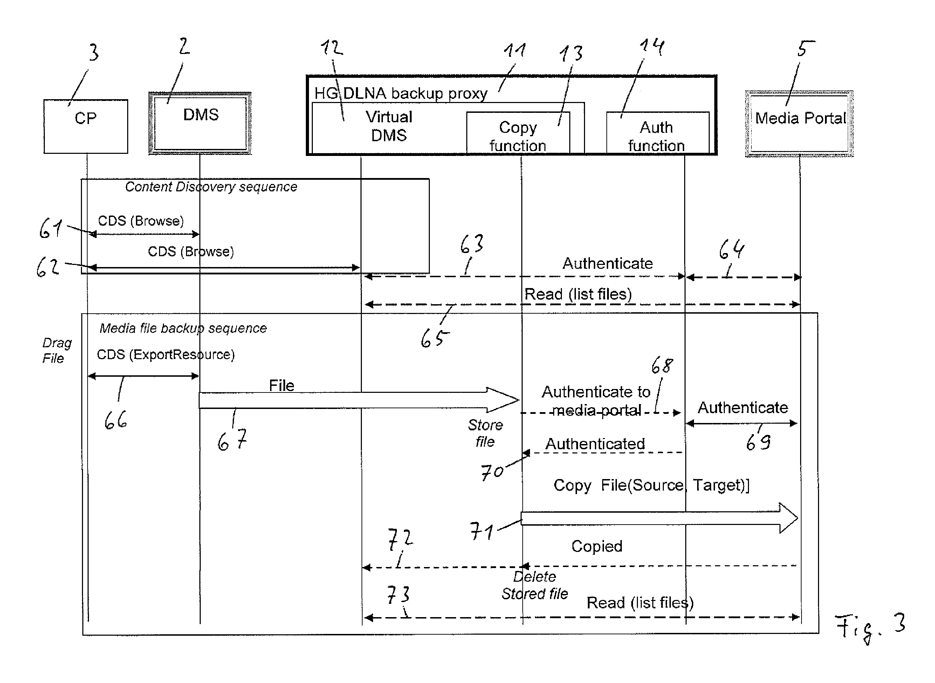

The message flow for a media file backup sequence is shown in figure 3. A user wants for example to back up some media files that are stored on his local media server 2 via his smartphone, the control device 3, on the Internet media portal 5. The control device 3 has implemented for example the UPnP AV function "CDS:Browse" to discover media files on his media server 2, step 61, or to discover his media files on the virtual DMS 12, step 62. Via the control device 3 and the "CDS:Browse" function, the user can see in particular also the media files from different outside sources on the virtual DMS 12, e.g. public Internet TV sources, and/or media sources from his friends, and also his backup sources. The backup function 11 included in its residential gateway 1 is mirroring his user media space 53 of the Internet media portal 5.

It is assumed that backup function 11 is already authenticated with the media portal 5. If not, for example if the residential gateway 1 was just switched on, the backup function 11 activates the authentication function 14, step 63, and in a further step 64, the authentication function 14 authenticates with the Internet media portal 5 by using the security credentials of the user of the home network. After authentication, the virtual DMS 12 remains connected with the Internet media portal 5, and the user can see the media files as stored on the Internet media portal 5, step 65.

The user uses now the control device 3 to drag a media file from his local media server 2 to the backup function 11, which is for example represented by a backup folder of the virtual DMS 12 and which folder the user sees on the graphical user interface 31 of the control device 3, for a backup of the media file. Also any other copy triggering action may be used for copying the media file from the media server 2 to the virtual DMS 12. The media file is copied within the home network of the user in accordance with known UPnP AV functions, e.g. a CDS:ExportResource function, which triggers the media server 2 to upload the media file to the virtual DMS 12.

When the media file is copied from the media server 2 to the virtual DMS 12, the backup function 11 starts to operate: the media file is temporarily stored within the residential gateway 1, steps 66, 67. The backup function 11 authenticates with the Internet media portal 5, steps 68-70, if not already done. Then in step 71, the media file is copied by the copy client 13 to the user media space 53 of the Internet media portal 5 via the copy server 51. When the media file is copied to the Internet media portal 5, then the copy of the media file in the DLNA backup proxy is deleted, step 72. The media file is stored now only on the Internet media portal 5 but not in the virtual DMS 12, and the media file is referenced in the virtual DMS 12, step 73.

How the media files are copied and restored between the DLNA backup proxy and the Internet media portal 5 is known from prior art, it can be any mechanism: e.g. FTP file transfer, file upload or download by using HTTP commands, or any other file transfer function within the public network. The media files are copied within the home network in accordance with known UPnP AV functions, in particular CDS:ExportResource and CDS:ImportResource functions, which triggers the media server 2 to upload a media file to the virtual DMS 12, respectively triggers the virtual DMS 12 to download a media file to the media server 2. How the media files on the Internet media portal 5 are read by the virtual DMS 12 is also open, it can be any mechanism. However, in the virtual DMS 12, the media files are represented in the UPnP AV format. A specific file folder of the virtual DMS 12 may refer to the Internet media portal 5, e.g. "My Media Portal", in which the media files as stored on the Internet media portal 5 are shown and can be accessed via UPnP AV browse or search actions.

The present invention therefore has the advantage that the backup function 11 of the residential gateway 1 authenticates automatically with the Internet portal 5, and the users of the home network do not need to remember the credentials for backing up of the media files on the Internet media portal 5. The backup of a media file happens within the UPnP AV environment directly via the control device 3, e.g. a smartphone or any other control device comprising a graphical user interface 31 and a control point 32, or a multitude of respective control devices 3 of the home network. The backup of media files on the Internet media portal 5 can be handled and viewed therefore as if they were done in the home environment.

Also other embodiments of the invention may be utilized by one skilled in the art without departing from the scope of the present invention. The invention is in particular not limited to residential gateways and may be used advantageously also for all kinds of other CPE devices, e.g. routers, switches, telephones and set-top boxes. The invention resides therefore in the claims herein after appended.

## Claims

1. A Universal Plug and Play backup system, comprising
a media server (2) including a media storage device,
a CPE device (1) including a backup function (11) with a virtual media server (12) comprising a copy client (13),
an Internet media portal (5) coupled via a network service provider network with the CPE device (1), the Internet media portal (5) including a copy server (51) for receiving media files from the copy client (13), and
a control device (3) for controlling the media server (2) and for copying a media file from the media server (2) to the virtual media server (12) for a backup of the media file on the Internet media portal (5).

2. The backup system of claim 1, wherein the media file copied to the Internet media portal (5) has a representation in the virtual media server (12), via which the media file is accessible by a user of the control device (3).

3. The backup system of claim 1 or 2, wherein the media file copied to the Internet media portal (5) for backup is displayed in a file folder of the virtual media server (12) within a list of other backed-up media files.

4. The backup system of claim 3, wherein the list is automatically synchronized with the media files copied to the Internet media portal (5).

5. The backup system of one of the preceding claims, wherein the system is a Universal Plug and Play Audio/Video system according to a Universal Plug and Play Audio/Video standard, and wherein the media file is copied from the media server (2) to the virtual media server (12) via Universal Plug and Play Audio/Video commands according to the Universal Plug and Play Audio/Video standard.

6. The backup system of claim 5, wherein the backup system is a Universal Plug and Play AV system according to the Universal Plug and Play Audio/Video version 2 specification.

7. The backup system of one of the preceding claims, wherein the backup function (11) includes an authentication function (14) to authenticate with the Internet media portal (5), in order to get authorized to copy the media file to the Internet media portal (5) and to get access to other media files copied to the Internet media portal (5), the authentication function (14) containing user credentials for accessing the Internet media portal (5), which authentication function (14) starts automatically with the operation of the CPE device (1).

8. The backup system of claim 7, wherein the backup function (11) including the virtual media server (12) and the authentication function (14) is a part of a DLNA backup proxy (11) included in the CPE device (1), the DLNA backup proxy (11) operating as a Digital Living Network Alliance (DLNA) media server in accordance with a DLNA standard.

9. The backup system of one of the proceeding claims, wherein the Internet media portal (5) is managed by an Internet service provider.

10. The backup system of one of the proceeding claims, wherein the CPE device (1) is a residential gateway.

11. A CPE device (1) comprising a backup function (11) according to one of the preceding claims.

12. A CPE device (1) comprising a backup function (11) with a virtual media server (12) and a copy client (13) for automatically copying a media file from a home network to an Internet media portal (5) coupled via a network service provider network with the CPE device (1) for a backup of the media file on the Internet media portal (5).

13. The CPE device (1) of claim 12, wherein the CPE device (1) acts as a media server in accordance with a Universal Plug and Play Audio/Video standard, and wherein the media file is copied from a media server (2) of the home network to the virtual media server (12) via Universal Plug and Play Audio/Video commands according to the Universal Plug and Play Audio/Video standard.

14. The CPE device (1) of claim 12 or 13, wherein the backup function (11) acts as a DLNA backup proxy (11), the DLNA backup proxy (11) operating as a DLNA media server in accordance with a DLNA standard.

15. The CPE device (1) of one of the claims 12, 13 or 14, wherein the backup function (11) includes an authentication function (14) to authenticate with the Internet media portal (5), in order to get authorized to copy the media file to the Internet media portal (5) and to get access to other media files copied to the Internet media portal (5), the authentication function (14) containing user credentials for accessing the Internet media portal (5), which authentication function (14) starts automatically with the operation of the CPE device (1).
